# EUROPÄISCHE PATENTSCHRIFT

(11) **EP 0 842 838 B1**
(45) Veröffentlichungstag und Bekanntmachung des Hinweises auf die Patenterteilung: **28.03.2001**
(21) Anmeldenummer: 97119785.0
(22) Anmeldetag: 12.11.1997
(51) Int. Cl.: B62B 3/18

(54) **Stapelbarer Einkaufswagen**
Nestable shopping trolley.
Chariot d'achat emboîtable.

(30) Priorität: 13.11.1996 DE 29619763 U
(43) Veröffentlichungstag der Anmeldung: 20.05.1998
(73) Patentinhaber: WANZL METALLWARENFABRIK GMBH, D-89336 Leipheim (DE)
(72) Erfinder: Wanzl, Rudolf, 89340 Leipheim (DE)

(56) Entgegenhaltungen:
- EP-A- 0 587 108
- GB-A- 2 034 175
- US-A- 4 296 521

## Beschreibung

Die Erfindung betrifft einen stapelbaren Einkaufswagen, der ein Fahrgestell aufweist, das einen Korb trägt, mit einer Schiebeeinrichtung und mit einer um eine horizontale Achse in das Korbinnere verschwenkbaren, das rückwärtige Korbende verschließenden Klappe, die mit Schlaufen ausgestattet ist, welche die horizontale Achse umfassen, wobei sich am inneren Krümmungsbereich der Schlaufen aus elastischem Material bestehende Lagerelemente befinden, die zwischen den Schlaufen und der horizontalen Achse angeordnet sind und die eine durch zwei Seitenflächen begrenzte Vertiefung aufweisen, in welche je eine Schlaufe der Klappe eingesetzt ist.

Einkaufswagen dieser Art, wie z.B. aus der EP-A-0 587 108 bekannt, weisen zum platzsparenden Stapeln eine das rückwärtige Korbende verschließende Klappe auf. Diese Klappe ist mit Schlaufen ausgestattet, welche einen als horizontale Achse dienenden Querstab des Korbes umfassen. Zwischen dem inneren Krümmungsbereich der Schlaufen und der horizontalen Achse sind Lagerelemente aus elastischem Material angeordnet, die den direkten Kontakt der Schlaufen mit dem Querstab verhindern, um die Oberflächen von Querstab und Schlaufen zu schützen und um gleichzeitig den Geräuschpegel bei der Bewegung der Klappe zu senken. Beim Aufsetzen der Lagerelemente auf die horizontale Achse werden die Lagerelemente etwas auseinandergebogen. Dabei werden die Seitenflächen der Lagerelemente gestaucht. An der oberen Seite der Seitenflächen kommt es daher leicht zu Aufwulstungen und zu Rissen. Auch ist ein Auseinanderbrechen der Lagerelemente nicht auszuschließen.

Es ist Aufgabe der Erfindung, bei einem Einkaufswagen der gattungsgemäßen Art die zur Aufhängung der Klappe an der horizontalen Achse bestimmten Lagerelemente so weiterzuentwickeln, daß die eben genannten Nachteile vermieden werden.

Die Lösung der Aufgabe besteht darin, daß die beiden Seitenflächen der Lagerelemente im oberen Bereich wenigstens eine Einbuchtung aufweisen.

An den Lagerelementen kommt es bei der Anbringung besonders im oberen Bereich zu Druckspannungen. In diesem Bereich sind nun die Einbuchtungen vorgesehen, so daß die Lagerelemente beim Aufsetzen auf die horizontale Achse leichter biegbar sind und keine inneren Spannungen mehr in dem Maße auftreten, daß ein Brechen der Lagerelemente befürchtet werden müßte. Dies erweist sich als äußerst zweckmäßig.

Die Erfindung wird anhand eines Ausführungsbeispieles näher erläutert. Es zeigt
- Fig. 1: einen Einkaufswagen;
- Fig. 2: ein Lagerelement für eine Klappe, sowie
- Fig. 3: ein an einer Schlaufe angeordnetes Lagerelement vor dem Aufsetzen auf eine horizontale Achse.

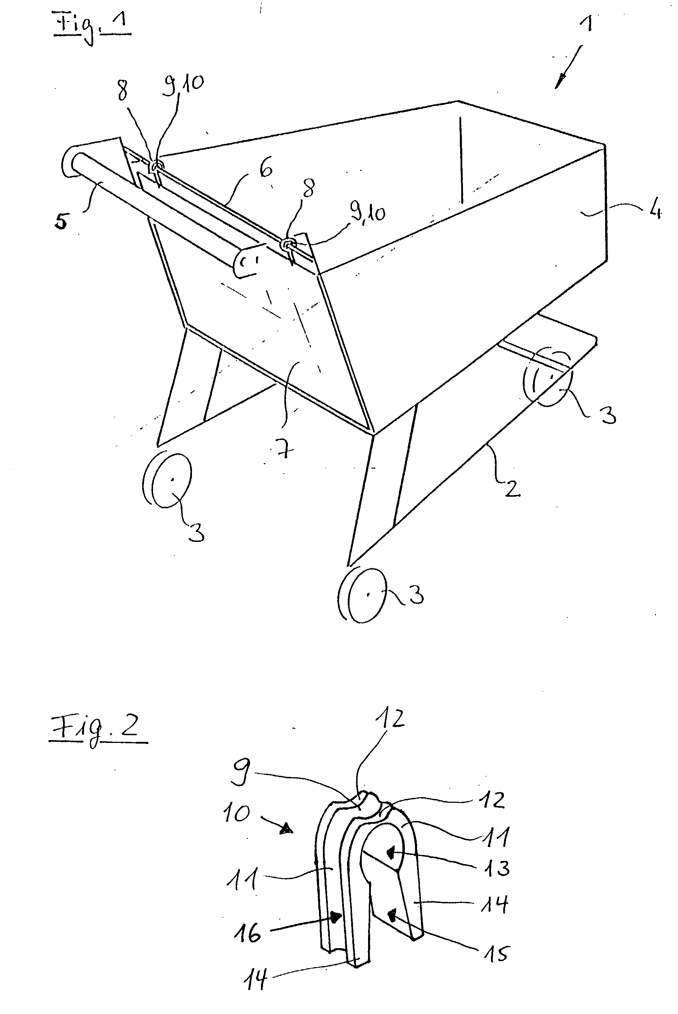

Fig. 1 zeigt einen Einkaufswagen 1, der ein Fahrgestell 2 mit wenigstens drei Fahrrollen 3 aufweist. Das Fahrgestell 2 trägt einen aus Drahtgitter gefertigten Korb 4, der eine rückwärtige Klappe 7 aufweist, die in bekannter Weise mittels Schlaufen 8 an einer horizontalen Achse 6 schwenkbar angeordnet ist. Zwischen den Schlaufen 8 und der horizontalen Achse 6 sind Lagerelemente 10 vorgesehen, die aus einem biegefähigen, geräuschdämpfendem Kunststoff gestaltet sind. Die Lagerelemente 10 weisen eine Vertiefung 16 auf die durch zwei Seitenflächen 11 begrenzt ist, die in ihrem oberen Bereich 9 wenigstens eine Einbuchtung 12 aufweisen.

In Fig. 2 ist ein für eine Schlaufe 8 bestimmtes Lagerelement 10 für eine Klappe 7 dargestellt, das eine Vertiefung 16 zur Aufnahme der Schlaufe 8 aufweist. Die Vertiefung 16 wird von zwei Seitenflächen 11 begrenzt. Die beiden Seitenflächen 11 weisen an ihrem oberen Bereich 9 wenigstens eine Einbuchtung 12 auf, die in jenem Bereich angeordnet sind, in welchem die starken inneren Spannungen beim Aufsetzen des Lagerelementes 10 auftreten. Außerdem weist das Lagerelement 10 einen kreisbogenabschnittförmigen Durchbruch 13 für die horizontale Achse 6 auf, der über einen Zwi15 im Lagerelement 10 zugänglich ist. Dieser Zwischenraum 15 ist sehr eng und verhindert gleichzeitig das Lösen des Lagerelementes von der horizontalen Achse 6.

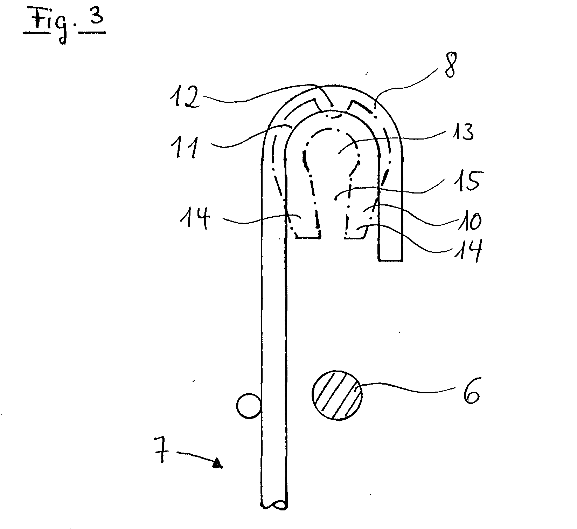

Fig. 3 zeigt ein an einer Schlaufe 8 angeordnetes Lagerelement 10 vor dem Aufsetzen auf der horizontalen Achse 6 und vor der endgültigen Montage. Das Lagerelement 10 ist aus einem biegefähigen, geräuschdämpfenden Kunststoff gestaltet, so daß zum Aufsetzen des Lagerelementes 10 die beiden Schenkel 14 des Lagerelementes 10 auseinandergedrückt werden können, so daß die horizontale Achse 6 durch den Zwischenraum 15 in den Durchbruch 13 gelangen kann. Das Auseinanderdrücken wird erleichtert, da die Schenkel 14 die Möglichkeit haben, durch die Einbuchtung 12 besser ausweichen zu können. Wenn die horizontale Achse 6 im Durchbruch 13 angelangt ist, klappen die Schenkel 14 des Lagerelementes 10 wieder in die Ausgangsstellung zurück. Zur endgültigen Montage wird die Schlaufe 8 in bekannter Weise noch zusammengedrückt.
Anstelle von nur einer Einbuchtung 12 pro Seitenfläche 11 können auch mehrere kleinere Einbuchtungen 12 im oberen Bereich 9 vorgesehen sein, welche die gleiche Wirkung wie nur eine Einbuchtung 12 garantieren.

## Patentansprüche

1. Stapelbarer Einkaufswagen (1), der ein Fahrgestell (2) aufweist, das einen Korb (4) trägt, mit einer Schiebeeinrichtung (5) und mit einer um eine horizontale Achse (6) in das Korbinnere verschwenkbaren, das rückwärtige Korbende verschließenden Klappe (7), die mit Schlaufen (8) ausgestattet ist, welche die horizontale Achse (6) umfassen, wobei sich am inneren Krümmungsbereich der Schlaufen (8) aus elastischem Material bestehende Lagerelemente (10) befinden, die zwischen den Schlaufen (8) und der horizontalen Achse (6) angeordnet sind und die eine durch zwei Seitenflächen (11) begrenzte Vertiefung (16) aufweisen, in welche je eine Schlaufe (8) der Klappe (7) eingesetzt ist, dadurch **gekennzeichnet**, daß die beiden Seitenflächen (11) der Lagerelemente (10) im oberen Bereich (9) wenigstens eine Einbuchtung (12) aufweisen.

2. Einkaufswagen nach Anspruch 1, dadurch **gekennzeichnet**, daß die Lagerelemente (10) aus einem biegefähigen, geräuschdämpfenden Kunststoff gestaltet sind.

## Claims

1. A stackable shopping trolley (1) having a wheel frame (2) carrying a basket (4), comprising a pushing arrangement (5) and a flap (7) pivotable about a horizontal axis (6) into the interior of the basket and closing the rear end thereof and provided with loops (8) surrounding the horizontal axis (6), wherein bearing members (10) comprising resilient material are provided on the inner curved region of the loops (8) and are arranged between the loops (8) and the horizontal axis (6) and have a groove (16) bounded by two side surfaces (11), a loop (8) of the flap (7) being inserted into each groove (16), characterised in that the two side surfaces (11) of the bearing members (10) have at least one recess (12) in the upper region (9).

2. A shopping trolley according to claim 1, characterised in that the bearing members (10) are formed from a flexible, sound-absorbing plastic.

## Revendications

1. Chariot à provisions (1) stockable par imbrication, muni d'un châssis (2) portant un panier (4), avec un dispositif de poussée (5) et un volet rabattable (7) qui peut pivoter vers l'intérieur du panier, autour d'un axe horizontal (6), obture l'extrémité postérieure dudit panier et est pourvu d'oeillets (8) ceinturant l'axe horizontal (6), sachant que des éléments de portée (10) consistant en un matériau élastique se trouvent dans la région intérieure de la courbure des oeillets (8), sont interposés entre lesdits oeillets (8) et l'axe horizontal (6), et comportent une creusure (16) qui est délimitée par deux surfaces latérales (11), et dans laquelle un oeillet respectif (8) du volet rabattable (7) est inséré, caractérisé par le fait que les deux surfaces latérales (11) des éléments de portée (10) présentent au moins une indentation (12) dans la région supérieure (9) .

2. Chariot à provisions selon la revendication 1, caractérisé par le fait que les éléments de portée (10) sont réalisés en une matière plastique douée de flexibilité et amortissant les bruits.
